# EUROPEAN PATENT SPECIFICATION

(11) **EP 2 477 313 B1**
(45) Date of publication and mention of the grant of the patent: **09.04.2014**
(21) Application number: 11151219.0
(22) Date of filing: 18.01.2011
(51) Int. Cl.: H02K 1/32, H02K 5/128

(54) **An electric machine**
Elektrische Maschine
Machine électrique

(43) Date of publication of application: 18.07.2012
(73) Proprietor: Bombardier Transportation GmbH, 10785 Berlin (DE)
(72) Inventor: Nordlund, Erik, SE-722 44 Västerås (SE); Jägers, Therese, SE-722 14 Västerås (SE); Sima, Mikael, SE-183 35 Täby (SE)
(74) Representative: Olsson, Jan

(56) References cited:
- EP-A1- 2 256 907
- EP-A2- 2 110 927
- WO-A1-2008/059852

## Description

### TECHNICAL FIELD OF THE INVENTION AND BACKGROUND ART

The present invention relates to an electric machine comprising a stator having a stator body with a stator winding wound therearound and configured to electrically create a plurality of stator poles disposed around the inner periphery of the stator body, means configured to connect said stator winding to an AC source or receiver, a rotor rotatably disposed within said stator and having a rotor body comprising a laminated assembly of mutually electrically insulated annular plates axially stacked with respect to an axis of rotation of the rotor, said rotor body having a plurality of permanent magnets received therein, and means sealing the rotor and a space circumferentially surrounding the rotor and separating the rotor and the stator for preventing air flow from the surroundings of the machine from reaching the rotor and said space.

Such an electric machine may operate as motor and/or generator, although this disclosure will focus mainly on the operation thereof as a motor.

By using a plurality of permanent magnets to produce the magnetic flux of the rotor a synchronous motor called permanent magnet synchronous motor is achieved. Such a motor has lower rotor losses compared to an induction motor and thus higher efficiency. It can also be built with a higher pole number, compared to an induction motor, without sacrificing performance, so that it can have a higher torque capability.

The present invention is particularly applicable to electric machines in the form of motors of the type defined in the introduction for creating a traction force of a track-bound vehicle, especially a rail vehicle, and this application of such an electric machine will mainly be discussed below without for that sake restricting the invention thereto. Such a motor, which of course may function as a generator when braking the vehicle, is particularly advantageous for such a vehicle for which a high torque capability with respect to a determined size of the motor is an important feature.

The efficiency of cooling such an electric machine determines the maximum power of operation when such an electric machine functions as a motor and the maximum power which may be delivered thereby in the case of generator function, in which the cooling of the permanent magnets is mostly most critical. If the temperature of the permanent magnets is raised above a certain level, normally in the range of 200°C, the magnets will be at least partially irreversibly demagnetized, so that it has to be ensured that such a temperature level may never be reached. Furthermore, the efficiency of the electric machine will also under normal operation thereof slightly decrease with an increasing temperature of the permanent magnets making an efficient cooling an important feature.

For electric machines of other types than permanent magnet machines a cooling air flow may pass through the entire machine, i.e. reaching the stator as well as the rotor and the space separating the rotor and the stator. However, fouling and contamination may occur as a result of dust, especially metal dust reaching the rotor and sticking thereto as a consequence of the presence of the permanent magnets, which is the reason for the presence of said sealing means in an electric machine of the type defined in the introduction. Especially in the case of such an electric machine used for creating a traction force in a track-bound vehicle such a motor is located in a tough environment in which a lot of dust is created, such as metal dust from braking discs, and which may through the cooling air reach the rotor and influence the proper function of the machine. Known electric machines of this type, such as known through EP 2 256 907 A1, have normally a primary cooling system for forced cooling by cooling the stator body by circulation of cooling water, thorough which the rotor is then cooled by transfer of heat therefrom out to the stator body/house. However, this forced cooling may fail and the power to the electric machine will then be shut off, but when located in a track-bound vehicle this will still be running. This means that the electric machine will still produce no-load losses, but the forced cooling is not operating, so that it is critical to cool the rotor to protect the magnets from high temperatures. In known electric machines of this type an impeller may be connected to the rotor axle for creating a flow of cooling air cooling the stator even if the primary cooling system fails. However, this only results in poor cooling of the rotor and by that the permanent magnets thereof.

### SUMMARY OF THE INVENTION

The object of the present invention is to provide an electric machine of the type defined in the introduction being improved in at least some aspect with respect to such electric machines already known.

This object is according to the invention obtained by providing such an electric machine with the features listed in the characterizing part of appended claim 1.

A flow of cooling air through the rotor body resulting in an efficient cooling of the rotor body and by that the permanent magnets received therein will by the arrangement of said first and second channels of the rotor body as known for a rotor body by WO 2008/059852 A1 be ensured also if a said primary cooling system will fail, since the flow of air will continue as long as the rotor is rotating and the motor produces losses. Thus, the permanent magnets will be efficiently protected against such failure of a primary cooling system. Furthermore, the efficient cooling of the rotor body means that the power at which the electric machine may be operated when functioning as a motor and the power deliverable thereby in the case of generator function may be increased. Furthermore, for a certain level of such a power the permanent magnets may be kept at a lower temperature level than would the rotor body be only indirectly cooled through cooling of the stator, which results in a higher efficiency of the electric machine.

Furthermore, by the features of forming the rotor body by equally designed plates having at least one through-hole for the said first channel and at least one slit extending from a location at the same distance as said through-hole from the centre of the plate and to the periphery thereof, and by stacking said plates while turning them with respect to each other around the centre thereof so as to determine the location, the number and the cross-section of said second channels important advantages are obtained. The use of such equally designed plates for constructing the rotor body will have a positive influence upon the production costs of the rotor. This appearance of said plates also results in a high flexibility with respect to the positioning and the length of said channels when assembling said plates for forming the rotor body.

According to an embodiment of the invention said second channels extend substantially radially with respect to said axis of rotation of the rotor from the respective first channel to the opening at the periphery of the rotor body. Such an extension of said second channels results in an efficient creation of an air flow through these channels and by that also into said first channels connected thereto by forces of inertia acting upon air present in the second channels upon rotation of the rotor.

According to another embodiment of the invention the rotor comprises a plurality of second channels per first channel having connections thereto distributed along the extension of the first channel. It may by this be avoided that hot regions are created in any parts of the rotor.

According to another embodiment of the invention said connections of said second channels are substantially uniformly distributed over the extension of the respective first channel, which promotes efficient cooling of the entire rotor as long as it rotates.

According to another embodiment of the invention said first channels extend substantially axially through the rotor body with respect to said axis of rotation of the rotor. One of the advantages of such an extension of the first channels is that this makes it normally easier to ensure that the presence of these channels will not have a noticeable influence upon the magnetic flux inside the rotor than would the extension be otherwise. Furthermore, the flow rate inside the channels may be kept on a high level when the channels have a straight extension.

According to another embodiment of the invention the rotor has a plurality of poles defined by said permanent magnets and disposed in the rotor body around said axis of rotation, and said first channels extend with respect to a cross-section of the rotor body through rotor body portions separating two adjacent rotor poles. This results in a minimum of disturbance of the magnetic flux inside the rotor caused by the presence of said first channels.

According to another embodiment of the invention the rotor body has a said first channel in each said portion separating adjacent rotor poles, and it is then preferred if the rotor body has the same number of said first channels as the number of rotor poles. This results in an efficient cooling of the rotor. The number of rotor poles is typically 2-24 or 6-12 and in a particular embodiment 8.

According to another embodiment of the invention said first channels are substantially uniformly distributed around said axis of rotation of the rotor, which also promotes an efficient and uniform cooling of the rotor.

According to another embodiment of the invention at least one of said first channels have an opening to the exterior of the rotor body in an end surface of the rotor body at both axial ends of the rotor body. This means that air may be drawn into said first channel from both sides of the rotor and accordingly air from both sides thereof may be used to cool the rotor and by that the air flowing through the rotor may have a lower temperature than should it come from only one end thereof. It also facilitates an efficient cooling of the entire rotor body.

According to another embodiment of the invention a plurality of projections, such as fins, are arranged on said rotor body end surface and configured to stir air to enter said first channels upon rotation of the rotor. Such a stirring action will influence the air flow cooling the rotor positively.

The invention also relates to a rotor for a track-bound vehicle electric machine having the features of the rotor in the electric machine according to the present invention as defined above. The advantages of such a rotor in a track-bound vehicle electric machine appear clearly from the above discussion. The same is applicable to a track-bound vehicle electric machine to which the present invention also relates.

The invention also relates to a driving arrangement for a track-bound vehicle comprising an electric machine according to the invention, use of an electric machine according to the invention in a driving arrangement for generating a traction force of a track-bound vehicle as well as a track-bound vehicle having a driving arrangement for generating a traction force of the vehicle including at least one electric machine according to the present invention. Also the advantageous features and the advantages of such a driving arrangement, use and vehicle appear clearly from the above discussion of the different embodiments of an electric machine according to the present invention.

Further advantages as well as advantageous features of the invention will appear from the following description.

### BRIEF DESCRIPTION OF THE DRAWINGS

With reference to the appended drawings below follows a specific description of embodiments of the invention cited as examples.
- Fig 1: is a very schematic side elevation view illustrating the stator and the rotor of an electric machine of the type to which the present invention relates,
- Fig 2: is a perspective view of an electric machine of the type to which the present invention relates,
- Fig 3: shows the machine according to Fig 2 in a longitudinal cross-section view,
- Fig 4: is a side elevation view illustrating a plate used to form the rotor body of an electric machine according to a first embodiment of the present invention,
- Fig 5: is a partially sectioned perspective view of a part of an electric machine according to said first embodiment of the present invention,
- Fig 6: is an enlarged view of a part of the electric machine shown in Fig 5, and
- Fig 7: is a very simplified perspective view of an axial end part of the rotor of an electric machine according to a second embodiment of the invention.

### DETAILED DESCRIPTION OF EMBODIMENTS OF THE INVENTION

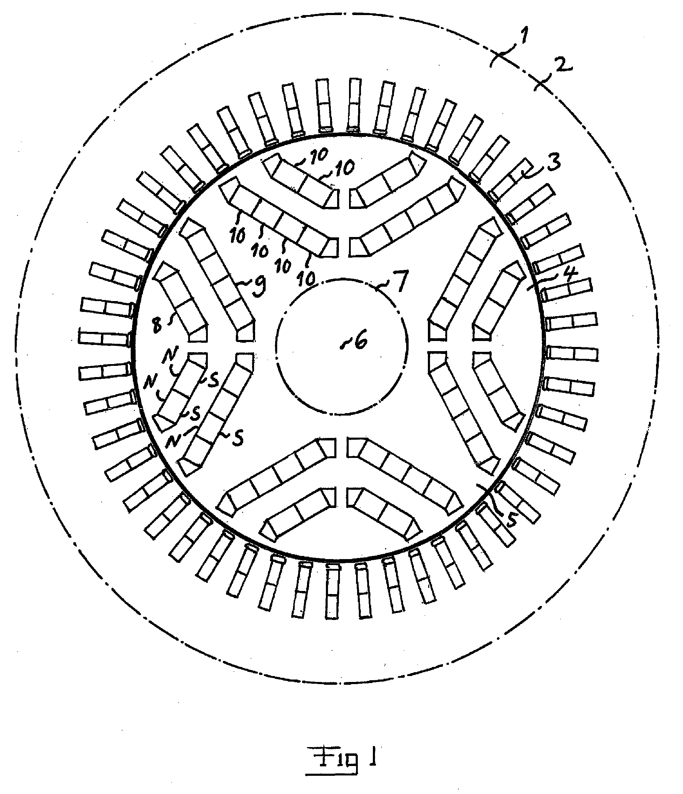

Fig 1 shows schematically in an axial end view some of the main parts of a track-bound vehicle electric machine of the type to which the present invention relates and which is disclosed more in detail in EP 2 264 860. This electric machine has a stator 1 with a stator body 2 with a stator winding (not shown) wound therearound and configured to electrically create a plurality of stator poles disposed around the inner periphery of the stator body. Said stator winding is received in radial slots 3 in the stator body, extending over the entire length of this body. 48 slots are in this way uniformly distributed around the inner periphery of the stator body 2, so that 12 said slots belong to one stator pole in the case of a four-pole electric machine as in the embodiment shown in Fig 1. The total number of slots and number of slots per pole may of course be any other conceivable.

The electric machine further comprises a rotor 4 with a rotor body 5, which as the stator body is made of a laminated assembly of mutually electrically insulated annular plates of magnetic steel axially stacked with respect to an axis of rotation 6 of the rotor for keeping eddy current losses in these bodies at low levels. The rotor body 5 is rigidly connected with respect to rotation to a rotor axle 7 which is to be connected to the wheel axle of a vehicle, possibly through a gear box.

The rotor body 5 comprises a plurality of longitudinal slots 8, 9 extending in parallel with said axis of rotation 6 of the rotor body. It is shown in Fig 1 how four such slots are arranged per pole of the rotor, two 8 with a smaller cross-section and two 9 with a larger cross-section. The slots 9 have in the present case, which is an illustrative example of one possibility of many, a rectangular cross-section of approximately 10 x 55 mm and a length of approximately 300 mm. Permanent magnets 10, here with a cross-section of 10 x 13 mm and a length of 37 mm, are arranged in each said slot in the form of a package of permanent magnets arranged in one layer, in one plane, side by side in the transversal and longitudinal direction of the slot with permanent magnets arranged in the same slot having the same magnet polarity direction being substantially perpendicular to said one layer formed by said package, and the sides of the north N and south S poles of these magnets are indicated for two slots 8, 9 in Fig 1. Eight permanent magnets are arranged in an end-to-end relationship in the longitudinal direction in each such permanent magnets package, and two permanent magnets are arranged side by side in the transversal direction of a slot 8 and four in that direction of a slot 9.

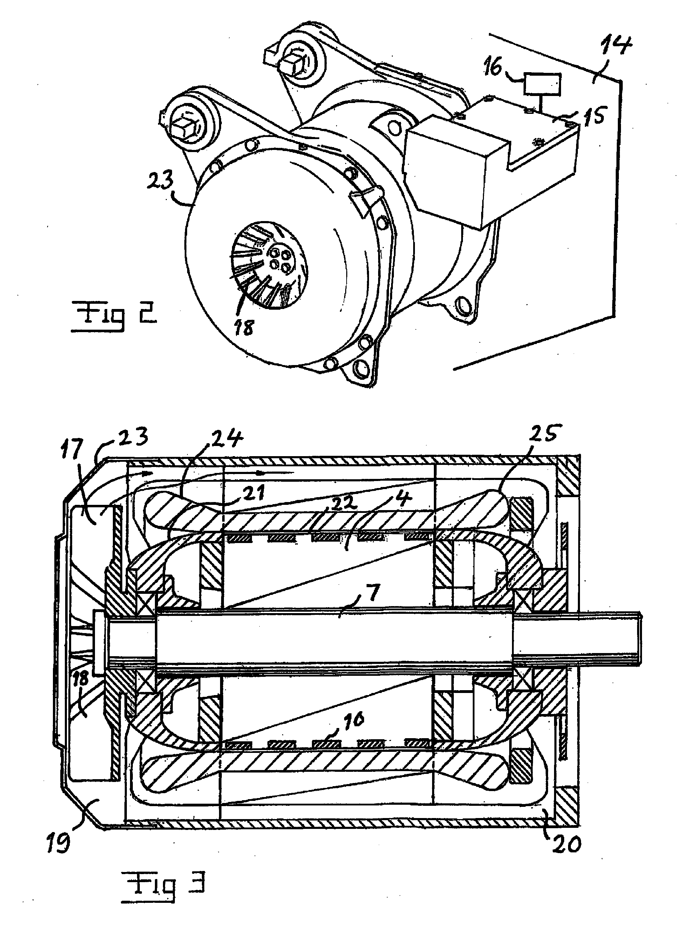

The electric machine has also means configured to connect the stator winding to an AC source or receiver, which in the present case is an AC-supply line or a diesel driven generator of the vehicle 14 schematically indicated. However, any type of AC source is conceivable, and the alternating current may very well be created by an inverter connected to a direct voltage source on the other side thereof and for instance controlled according to a Pulse Width Modulation pattern. The box 15 in Fig 2 indicates control equipment for the electric machine, such as a converter, and said AC source is here indicated by the box 16. "AC receiver" refers in this disclosure to the case of an electric machine operating in the generator mode.

Fig 3 shows another possible appearance of a rotor in an electric machine according to the present invention, the permanent magnets 10 are differently disposed with respect to Fig 1 buried in the rotor body at the periphery thereof. This electric machine has means configured to generate a flow of air for cooling parts of the electric machine, and this means includes an impeller 17 with blades 18 fixed to the rotor axle 7 at one end 19 of the stator body so as to generate a flow of air substantially axially with respect to an axis of rotation of the rotor towards the other end 20 of the stator body. The electric machine has an arrangement for directing the flow of air generated by the impeller 17 and which comprises means 21 sealing the rotor and a space 22 circumferentially surrounding the rotor 4 and separating the rotor and the stator for preventing air flow from the surroundings of the machine from reaching the rotor and said space. Said means 21 directs together with a fan casing 23 said cooling air flow towards stator winding end turns 24, 25 for cooling thereof. The electric machine may also have a primary cooling system not shown for circulating water in the stator, which means that the rotor will by that also be cooled through transfer of heat from the rotor to the stator. However, this forced cooling operation may fail while the vehicle in which the machine is arranged is still running and the machine still produces no-load losses as a consequence of the presence of permanent magnets in the rotor rotating.

It is crucial that the temperature of the permanent magnets may never reach a level as of which an irreversible demagnetizing of the magnets will start. Such a critical temperature level is normally about 200°C, and it is in such a case an aim to ensure that the temperature of the permanent magnets may never exceed 180°C irrespectively of failure of said system for forced cooling at any operation conditions, such as temperature of the environment or actual speed of rotation of the rotor, upon occurrence of such a failure.

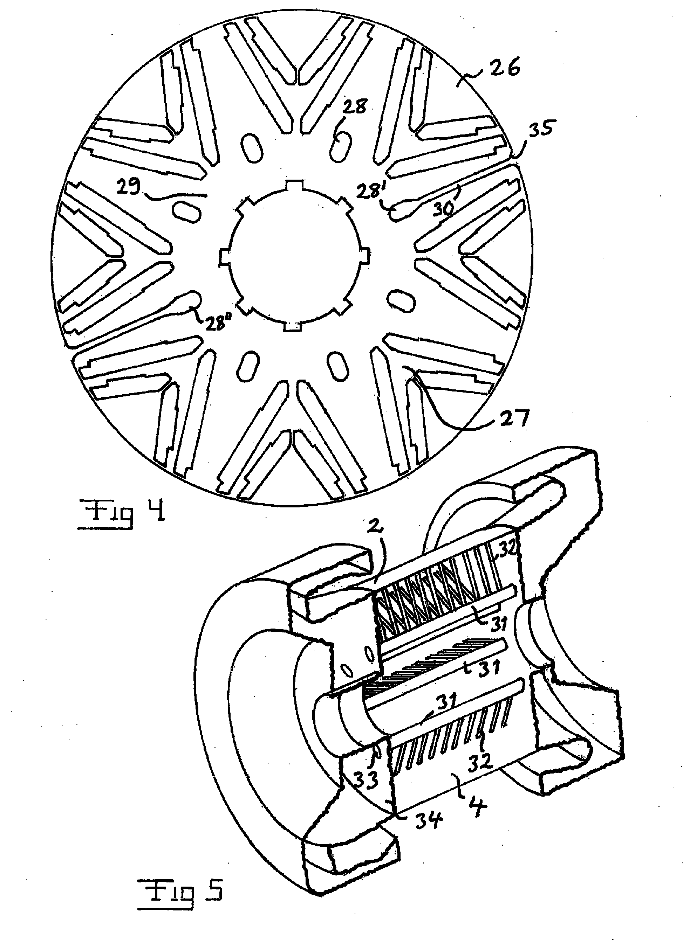

Fig 4 illustrates the appearance of a said annular plate 26 used to form a rotor body by being axially stacked onto other such or similarly designed plates. It is shown how the plate is provided with slots 8', 9' for receiving permanent magnets and by that defining eight rotor poles 27 uniformly distributed around the circumference of the rotor. The plate 26 is provided with a through-hole 28 in each portion 29 separating the slots for adjacent rotor poles. Two of these 8 through-holes 28' and 28" are connected to a slit 30 extending to the periphery of the plate.

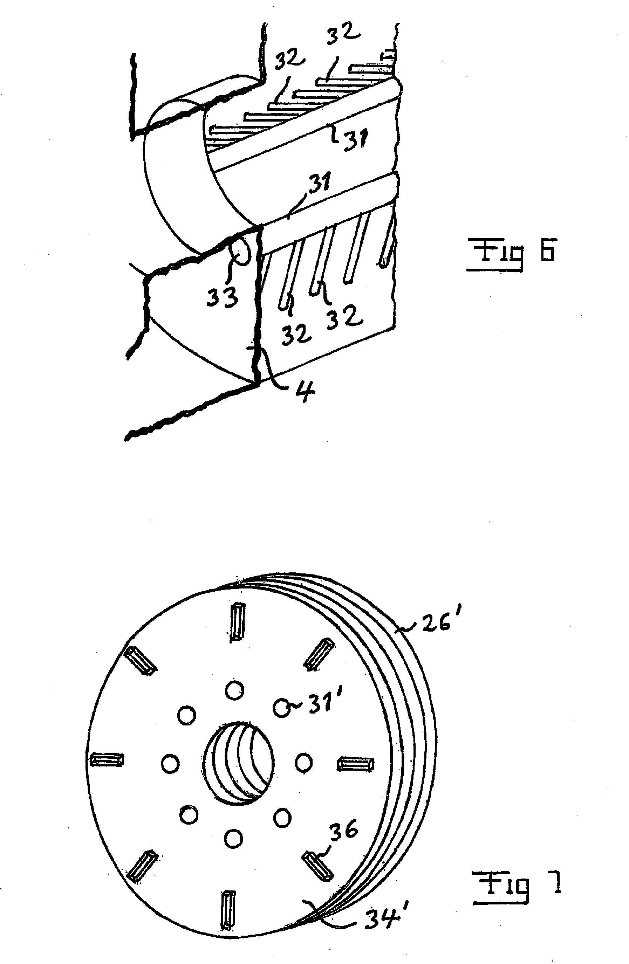

By stacking equally designed such plates while occasionally turning them n x 45°, in which n = 1, 2, 3, 4, 5, 6 or 7, with respect to each other a rotor having first channels 31 extending axially with respect to said axis of rotation of the rotor and second channels 32 connecting the respective first channel to a said space 22 circumferential surrounding the rotor by opening at the periphery of the rotor body will be obtained. Such stacking is preferably carried out so that the first channels are provided with substantially the same number of second channels and the second channels are uniformly distributed along the longitudinal extension of the respective first channel and by that of the rotor. The first channels have each preferably an opening 33 to the exterior of the rotor body in an end surface of the rotor body at both axial ends of the rotor body. Typical dimensions of a rotor formed by such plates 26 and shown in Figs 5 and 6 are as follows. Diameter of the rotor 359 mm, cross-section of the first channels 12x20 mm, diameter of second channels 5 mm and distance between adjacent second channels along the extension of the first channels 15 mm.

The design of said rotor with said first and second channels results in the following influence upon the cooling of the rotor. As long as the rotor rotates air present in said first channels 31 and second channels 32 will by centrifugal forces be thrown out from the second channels 32 to said space 22 while creating a flow of air through the rotor body from said openings 33 of the first channels and to the opening 35 of the second channels into this space. The air will by that receive heat from the rotor and transfer this to the stator house surrounding the rotor while moving in said space 22 towards said end surfaces 34 where it will be drawn into the first channels again for continued cooling of the rotor body. Thus, this cooling action does not require any supply of power or accurate operation of any control equipment, but it will be ensured as long as the rotor rotates and said permanent magnets create no-load losses heating the rotor. The cooling will also be very efficient, since it takes place inside the rotor at locations nearly uniformly distributed longitudinally as well as transversely with respect to the axis of rotation of the rotor. The openings 35 of said second channels have preferably a rounded extension connecting the channel with the rotor periphery surface for increasing the air flow out of the rotor.

A part of a rotor seen from one axial end thereof in an electric machine according to a second embodiment of the invention is very schematically illustrated in Fig 7. The thickness of the plates 26' stacked for forming the rotor is not at scale, and they will in fact be thinner with respect to the other dimensions of the rotor. It is shown how the first channels 31' of this rotor have a circular cross-section, typically with a diameter in the order of 10-15 mm. A plurality of projections in the form of fins 36 are arranged on the rotor body end surface 34' and configured to stir air to enter the first channels 31' upon rotation of the rotor. This results in a mixing of the air close to said end surface of the rotor and by that a more efficient transfer of heat from the rotor to the air flowing through said channels for cooling the rotor. Such projections may have quite other shapes than shown in Fig 7 and even be formed by screw heads.

When providing a rotor according to the invention with first and second channels the following considerations have to be done when determining dimensions, the density and the location of these channels. An increasing cross-section area of these channels increases the flow rate of air in said channels and by that the cooling effect of this air flow. Another positive result of such an increasing cross-section is a lower weight of the rotor. However, for a most efficient magnetic flux inside the rotor said cross-section area is to be kept as small as possible. Thus, it is an aim to find the best compromise while considering these facts when arranging said channels.

The invention is of course not in any way restricted to the embodiments described above, but many possibilities to modifications thereof will be apparent to a person with ordinary skill in the art without departing from the scope of the invention as defined in the appended claims.

For an electric machine having a very short rotor it could principally be enough to have said first channels opening only at one end surface of the rotor body and closed at the other end surface thereof. Each first channel may then have as few as one or two second channels connected thereto.

The number of first and second channels may be arbitrary, and the number of first channels may for instance be half or twice the number of rotor poles. In the case of a long rotor it may be advantageous to have second channels arranged at a higher density in the mid region (axially seen) of the rotor than close to the ends thereof for having more air exiting the rotor in the mid region and flowing in said space along the periphery of the rotor for heat exchange therewith.

## Claims

1. An electric machine comprising:
• a stator (1) having a stator body (2) with a stator winding wound therearound and configured to electrically create a plurality of stator poles disposed around the inner periphery of the stator body,
• means (15) configured to connect said stator winding to an AC source or receiver (16),
• a rotor (4) rotatably disposed within said stator and having a rotor body (5) comprising a laminated assembly of mutually electrically insulated annular plates (26, 26') axially stacked with respect to an axis of rotation of the rotor, said rotor body having a plurality of permanent magnets (10) received therein,
• means (21) sealing the rotor and a space (22) circumferentially surrounding the rotor and separating the rotor and the stator for preventing air flow from the surroundings of the machine from reaching the rotor and said space,
**characterized in that** said rotor body plates (26, 26') are stacked so as to form:
• at least two first channels (31, 31') extending inside the rotor body (5) from one axial end of the rotor body to an opposite axial end thereof and having an opening (33) to the exterior of the rotor body in an end surface (34) of the latter at at least one of these axial ends, and
• at least one separate second channel (32) associated with each first channel (31, 31') and connecting the respective first channel to said space (22) circumferentially surrounding the rotor by opening at the periphery of the rotor body so as to upon rotation of the rotor throw air out from said second channel to said space while creating a flow of air through the rotor body from said opening of the first channel (31, 31') and to said opening (35) of the second channel (32) into said space while cooling the rotor body,
that said rotor body (5) is formed by equally designed said plates (26, 26') having at least one through-hole (28, 28') for a said first channel (31) and at least one slit (30) extending from a location at the same distance as said through-hole from the centre of the plate and to the periphery thereof, and that said plates (26, 26') are stacked while being turned with respect to each other around the centre thereof so as to determine the location, the number and the cross-section of said second channels (32).

2. An electric machine according to claim 1, **characterized in that** said second channels (32) extend substantially radially with respect to said axis of rotation of the rotor (4) from the respective first channel (31, 31') to the opening at the periphery of the rotor body.

3. An electric machine according to claim 1 or 2, **characterized in that** the rotor comprises a plurality of second channels (32) per first channel (31, 31') having connections thereto distributed along the extension of the first channel.

4. An electric machine according to claim 3, **characterized in that** said connections of said second channels (32) are substantially uniformly distributed over the extension of the respective first channel (31, 31').

5. An electric machine according to any of the preceding claims, **characterized in that** said first channels (31, 31') extend substantially axially through the rotor body (5) with respect to said axis of rotation of the rotor.

6. An electric machine according to any of the preceding claims, **characterized in that** the rotor has a plurality of poles (27) defined by said permanent magnets (10) and disposed in the rotor body (5) around said axis of rotation, and that said first channels (31, 31') extend with respect to a cross section of the rotor body through rotor body portions (29) separating two adjacent rotor poles.

7. An electric machine according to claim 6, **characterized in that** the rotor body (5) has a said first channel (31, 31') in each said portion (29) separating adjacent rotor poles (27).

8. An electric machine according to claim 7, **characterized in that** the rotor body (5) has the same number of said first channels (31, 31') as the number of rotor poles (27).

9. An electric machine according to any of the preceding claims, **characterized in that** said first channels (31, 31') are substantially uniformly distributed around said axis of rotation of the rotor (4).

10. An electric machine according to any of the preceding claims, **characterized in that** at least one of said first channels (31, 31') have an opening (33) to the exterior of the rotor body in an end surface of the rotor body at both axial ends of the rotor body.

11. An electric machine according to any of the preceding claims, **characterized in that** a plurality of projections (36), such as fins, are arranged on said rotor body end surface (34') and configured to stir air to enter said first channels upon rotation of the rotor.

12. A rotor for a track-bound vehicle electric machine, **characterized in that** it has the features of a rotor (4) in the electric machine according to any of claims 1-11.

13. A track-bound vehicle electric machine **characterized in that** it is an electric machine according to any of claims 1-11.

14. A driving arrangement for a track-bound vehicle, **characterized in that** it comprises an electric machine according to claim 13.

15. Use of an electric machine according to any of claims 1-11 in a driving arrangement for generating a traction force of a track-bound vehicle.

16. A track-bound vehicle having a driving arrangement for generating a traction force of the vehicle including at least one electric machine according to any of claims 1-11.

## Patentansprüche

1. Elektrische Maschine, umfassend einen Stator (1) mit einem Statorkörper (2), der eine Statorwicklung aufweist, die um ihn gewickelt und so gestaltet ist, daß mehrere Statorpole elektrisch erzeugt werden, die rund um den Innenumfang des Statorkörpers angeordnet sind; ferner umfassend eine Einrichtung (15), um die Statorwicklung mit einer Gleichstromquelle oder einem Empfänger (16) zu verbinden; einen Rotor (4), der in dem Stator drehbar angeordnet ist und einen Rotorkörper (5) aufweist, umfassend eine laminierte Anordnung aus wechselweise elektrisch isolierten, ringförmigen Platten (26, 26'), die in Bezug auf eine Drehachse eines Rotors in axialer Richtung geschichtet sind, wobei der Rotorkörper mehrere Permanentmagneten (10) aufweist, die in ihm sitzen, und schließlich umfassend eine Vorrichtung (21), die den Rotor und einen ihn umfänglich umgebenden Raum (22) abdichtet und den Rotor sowie den Stator vor einem von der Umgebung der Maschine kommenden Luftstrom schützt, so daß dieser Luftstrom den Rotor und den Raum nicht erreicht, **dadurch gekennzeichnet, daß** die Rotorkörperplatten (26, 26') beschichtet sind, so daß wenigstens zwei erste Kanäle (31, 31') gebildet werden, die sich im Inneren des Rotorkörpers (5) von einem axialen Ende des Rotorkörpers zu einem gegenüberliegenden axialen Ende des Rotorkörpers erstrecken und eine Öffnung (33) zum Außenraum des Rotorkörpers in einer Endoberfläche (34) des Rotorkörpers, an wenigstens einem dieser axialen Enden aufweisen, und des weiteren mit wenigstens einem separaten zweiten Kanal (32), der zu jedem ersten Kanal (31, 31') gehört und den entsprechenden ersten Kanal mit dem Raum (22) verbindet, welcher den Rotor umfänglich umgibt, wobei beim Drehen des Rotors Luft aus dem zweiten Kanal in den Raum gefördert wird, während gleichzeitig ein Luftstrom durch den Rotorkörper von der Öffnung des ersten Kanals (31, 31') zu der Öffnung (35) des zweiten Kanals (32) in den Raum hinein erzeugt wird, wobei der Rotorkörper gekühlt wird, wobei ferner der Rotorkörper (5) durch gleichmäßig gestaltete Platten (26, 26') gebildet wird, die wenigstens ein Durchgangsloch (28, 28') für einen genannten ersten Kanal (31) aufweisen und wenigstens einen Schlitz (30), der sich von einem Ort mit demselben Abstand in das Durchloch von der Mitte der Platte und zu ihrem Umfang erstreckt, und wobei die Platten (26, 26') geschichtet sind und dabei in Bezug aufeinander rund um ihre Mitte so gedreht sind, daß die Lage, die Anzahl und der Querschnitt der zweiten Kanäle (32) festgelegt werden.

2. Elektrische Maschine nach Anspruch 1, **dadurch gekennzeichnet, daß** die zweiten Kanäle (32) sich im wesentlichen radial in Bezug auf die Drehachse des Rotors (4) von dem entsprechenden ersten Kanal (31, 31') zu der Öffnung am Umfang des Rotorkörpers erstrecken.

3. Elektrische Maschine nach Anspruch 1 oder 2, **dadurch gekennzeichnet, daß** der Rotor mehrere zweite Kanäle (32) pro erstem Kanal (31, 31') aufweist, die mit ihm Verbindungen besitzen, welche über die Länge des ersten Kanals verteilt sind.

4. Elektrische Maschine nach Anspruch 3, **dadurch gekennzeichnet, daß** die Verbindungen der zweiten Kanäle (32) im wesentlichen gleichförmig über die Länge des entsprechenden ersten Kanals (31, 31') verteilt sind.

5. Elektrische Maschine nach einem der vorhergehenden Ansprüche, **dadurch gekennzeichnet, daß** die ersten Kanäle (31, 31') sich im wesentlichen axial durch den Rotorkörper (5) in Bezug auf die Drehachse des Rotors erstrecken.

6. Elektrische Maschine nach einem der vorhergehenden Ansprüche, **dadurch gekennzeichnet, daß** der Rotor mehrere Pole (27) aufweist, die durch die Permanentmagneten (10) begrenzt sind und in dem Rotorkörper (5) rund um die Drehachse angeordnet sind, und daß sich die ersten Kanäle (31, 31') bezüglich es Querschnitts des Rotorkörpers durch Rotorkörperteile (29) erstrecken, die zwei benachbarte Rotorpole trennen.

7. Elektrische Maschine nach Anspruch 6, **dadurch gekennzeichnet, daß** der Rotorkörper (5) in jedem genannten Teil (29) einen ersten Kanal (31, 31') aufweist, der benachbarte Rotorpole (27) trennt.

8. Elektrische Maschine nach Anspruch 7, **dadurch gekennzeichnet, daß** der Rotorkörper dieselbe Anzahl erster Kanäle (31, 31') aufweist wie die Zahl der Rotorpole (27).

9. Elektrische Maschine nach einem der vorhergehenden Ansprüche, **dadurch gekennzeichnet, daß** die ersten Kanäle (31, 31') im wesentlichen gleichförmig rund um die Drehachse des Rotors (4) verteilt sind.

10. Elektrische Maschine nach einem der vorhergehenden Ansprüche, **dadurch gekennzeichnet, daß** wenigstens einer der ersten Kanäle (31, 31') eine Öffnung (33) in einer Endoberfläche des Rotorkörpers an beiden axialen Enden des Rotorkörpers aufweist, die nach außen führt.

11. Elektrische Maschine nach einem der vorhergehenden Ansprüche, **dadurch gekennzeichnet, daß** mehrere Vorsprünge (36), beispielsweise Rippen, auf der Endoberfläche (34') des Rotorkörpers angeordnet und so gestaltet sind, daß sie die Luft verwirbeln, damit diese beim Drehen des Rotors in die ersten Kanäle eintritt.

12. Rotor für eine elektrische Maschine eines schienengebundenen Fahrzeugs, **dadurch gekennzeichnet, daß** der Rotor die Merkmale eines Rotors (4) in der elektrischen Maschine gemäß einem der Ansprüche 1 bis 11 aufweist.

13. Elektrische Maschine eines schienengebundenen Fahrzeugs **dadurch gekennzeichnet, daß** es sich um eine elektrische Maschine gemäß einem der Ansprüche 1 bis 11 handelt.

14. Antriebs-Anordnung für ein schienengebundenes Fahrzeug, **dadurch gekennzeichnet, daß** die Anordnung eine elektrische Maschine gemäß Anspruch 13 aufweist.

15. Verwendung einer elektrischen Maschine gemäß einem der Ansprüche 1 bis 11 in einer Antriebs-Anordnung zur Erzeugung einer Zugkraft eines schienengebundenen Fahrzeugs.

16. Schienengebundenes Fahrzeug mit einer Antriebs-Anordnung zur Erzeugung einer Zugkraft des Fahrzeugs mit wenigstens einer elektrischen Maschine gemäß einem der Ansprüche 1 bis 11.

## Revendications

1. Machine électrique comprenant :
• un stator (1) ayant un corps (2) de stator, autour duquel est enroulé un enroulement de stator et qui est configuré pour créer électriquement une pluralité de pôles de stator disposés autour de la périphérie intérieure du corps du stator,
• des moyens (15) configurés pour connecter l'enroulement de stator à une source de courant alternatif ou à un récepteur (16),
• un rotor (4) monté à rotation dans le stator et ayant un corps (5) de rotor comprenant un ensemble feuilleté de plaques (26, 26') annulaires, isolées électriquement mutuellement et empilées axialement par rapport à un axe de rotation du rotor, le corps du rotor ayant une pluralité d'aimants (10) permanents qui y sont logés,
• des moyens (21) rendant étanche le rotor et un espace (22) entourant circonférentiellement le rotor et séparant le rotor et le stator pour empêcher un courant d'air provenant de l'environnement de la machine d'atteindre le rotor et cet espace,
**caractérisé en ce que** les plaques (26, 26') du corps du rotor sont empilées de manière à former :
• au moins deux premiers canaux (31, 31') s'étendant à l'intérieur du corps (5) du rotor d'une extrémité axiale du corps du rotor à son extrémité axiale opposée et ayant une ouverture (33) vers l'extérieur du corps du rotor dans une surface (34) d'extrémité de ce dernier en au moins l'une de ces extrémités axiales, et
• au moins un deuxième canal (32) distinct, associé à chaque premier canal (31, 31') et mettant le premier canal respectif en communication avec l'espace (22) entourant circonférentiellement le rotor par une ouverture à la périphérie du corps du rotor de manière à projeter par la rotation du rotor de l'air hors du second canal vers l'espace, tout en créant un courant d'air dans le corps du rotor allant de l'ouverture du premier canal (31, 31') et à l'ouverture (35) du deuxième canal (32) dans l'espace tout en refroidissant le corps du rotor, **en ce que** le corps (5) du rotor est formé par les plaques (26, 26') également conçues, ayant au moins un trou (28, 28') traversant pour le premier canal (21) et au moins une fente (30) partant d'un emplacement à la même distance que le trou traversant du centre de la plaque et allant à sa périphérie, et **en ce que** les plaques (26, 26') sont empilées en étant tournées l'une par rapport à l'autre autour de leur centre de manière à déterminer l'emplacement, le nombre et la section transversale des deuxièmes canaux (32).

2. Machine électrique suivant la revendication 1, **caractérisée en ce que** les deuxièmes canaux (32) s'étendent, sensiblement radialement par rapport à l'axe de rotation du rotor (4), du premier canal (31, 31') respectif à l'ouverture à la périphérie du corps du rotor.

3. Machine électrique suivant la revendication 1 ou 2, **caractérisée en ce que** le rotor comprend une pluralité de deuxièmes canaux (32) par premier canal (31, 31') ayant des communications avec lui réparties sur l'étendue du premier canal.

4. Machine électrique suivant la revendication 3, **caractérisée en ce que** les communications des deuxièmes canaux (32) sont réparties sensiblement de manière uniforme sur l'étendue du premier canal (31, 31') respectif.

5. Machine électrique suivant l'une quelconque des revendications précédentes, **caractérisée en ce que** les premiers canaux (31, 31') s'étendent sensiblement axialement dans le corps (5) du rotor par rapport à l'axe de rotation du rotor.

6. Machine électrique suivant l'une quelconque des revendications précédentes, **caractérisée en ce que** le rotor a une pluralité de pôles (27) définis par les aimants (10) permanents et disposés dans le corps (5) du rotor autour de l'axe de rotation, et **en ce que** les premiers canaux (31, 31') s'étendent par rapport à une section transversale du corps du rotor dans des parties (29) du corps du rotor séparant deux pôles voisins du rotor.

7. Machine électrique suivant la revendication 6, **caractérisée en ce que** le corps (5) du rotor a un dit premier canal (31, 31') dans chaque dite partie (29) séparant des pôles (27) voisins du rotor.

8. Machine électrique suivant la revendication 7, **caractérisée en ce que** le corps (5) du rotor a le même nombre de dit premiers canaux (31, 31') que le nombre de pôles (27) du rotor.

9. Machine électrique suivant l'une quelconque des revendications précédentes, **caractérisée en ce que** lesdits premiers canaux (31, 31') sont répartis d'une manière sensiblement uniforme autour de l'axe de rotation du rotor.

10. Machine électrique suivant l'une quelconque des revendications précédentes, **caractérisée en ce qu'**au moins l'un desdits premiers canaux (31, 31') a une ouverture (33) vers l'extérieur du corps du rotor dans une surface d'extrémité du corps du rotor aux deux extrémités axiales du corps du rotor.

11. Machine électrique suivant l'une quelconque des revendications précédentes, **caractérisée en ce qu'**une pluralité de saillies (36), telles que des ailettes, sont disposées sur la surface (34') d'extrémité du corps du rotor et configurées pour agiter de l'air entrant dans lesdits premiers canaux par rotation du rotor.

12. Rotor pour une machine électrique d'un véhicule sur rail, **caractérisé en ce qu'**il a les caractéristiques d'un rotor (4) de la machine électrique suivant l'une quelconque des revendications 1 à 11.

13. Machine électrique pour un véhicule sur rail, **caractérisée en ce que** c'est une machine électrique suivant l'une quelconque des revendications 1 à 11.

14. Agencement de traction d'un véhicule sur rail, **caractérisé en ce qu'**il comprend une machine électrique suivant la revendication 13.

15. Utilisation d'une machine électrique suivant l'une quelconque des revendications 1 à 11, dans un agencement de traction pour produire une force de traction d'un véhicule sur rail.

16. Véhicule sur rail ayant un agencement de traction pour produire une force de traction du véhicule comprenant au moins une machine électrique suivant l'une quelconque des revendications 1 à 11.
